# EUROPEAN PATENT APPLICATION

(11) **EP 2 573 473 A1**
(43) Date of publication of application: **27.03.2013**
(21) Application number: 12006148.6
(22) Date of filing: 30.08.2012
(51) Int. Cl.: F24D 19/02, F24H 9/06

(54) **System for fixing thermo sanitary appliances**

(30) Priority: 22.09.2011 IT AN20110130
(71) Applicant: ARISTON THERMO S.P.A., 60044 Fabriano (AN) (IT)
(72) Inventor: Biagioli, Evandro, 60044 Fabriano (AN) (IT); Ferroni, Stefano, 60044 Fabriano (AN) (IT); Mancini, Angelo, 60044 Fabriano (AN) (IT); Sampaolesi, Roberto, 60044 Fabriano (AN) (IT)
(74) Representative: Premru, Rok

(57) **Abstract**

The object of the present invention is a wall (P) fixing unit (1) for a thermo-sanitary appliance (AT) capable of being mounted on anchoring rods (T) walled up onto said wall (P), horizontally aligned one to the other with an inter-axis measuring I, and of coupling with said thermo-sanitary appliance (AT) through one or more brackets (2).

The fixing unit (1) is characterised in that it comprises at least one flat fixing plate (11) lying substantially vertical, a spacer (12, 12a, 12b), consisting of one (12) or more parts (12a, 12b), defining an inter-space (IS) between the inner face (112) of said plate (11) and the installation wall (P), coupling means (15) with said anchoring rods (T), consisting of a hole (15), having a horizontal axis, and a guide (13) for the correct and safe insertion of said bracket (2) within said inter-space (IS).

## Description

The object of the present invention is an innovative wall fixing unit for wall appliances.

The invention, particularly useful for heavy wall appliances to be fixed to difficult to access walls, shall be described for the particular case wherein such wall appliance is a thermo-sanitary appliance or, even more in particular, a storage water heater.

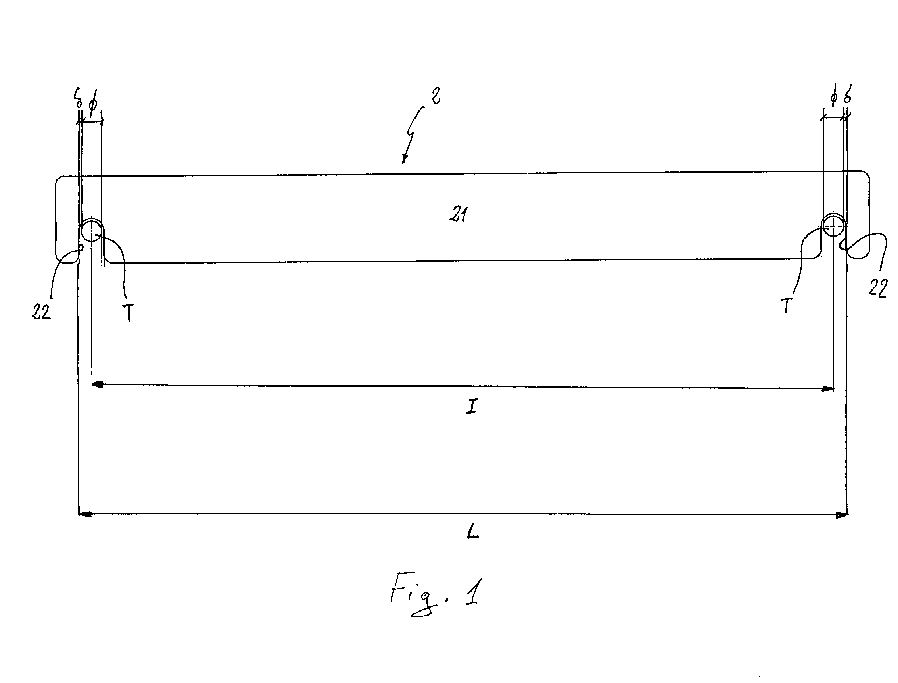

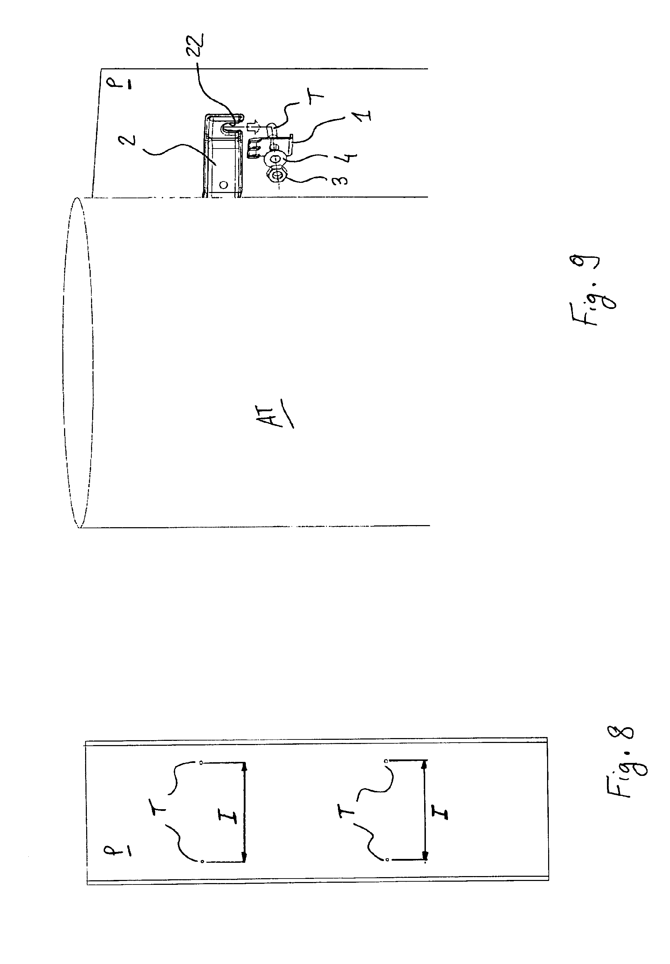

The following prior art discussion shall be made with special reference to figs. 1 and 8.

It is known to hang a thermo-sanitary appliance AT on a wall P hooking and locking one or more bracket elements 2 of the thermo-sanitary appliance AT to hooking means T previously anchored to the same wall P.

Such hooking means T preferably consist of threaded anchoring rods T walled up onto wall P whereon bracket 2 is first simply rested and then permanently constrained by tightening it to said threaded anchoring rods G through nuts or similar means.

In general, the support bracket 2, having an essentially elongated shape in horizontal direction, comprises a substantially flat main portion 21 at the opposite ends whereof there are provided two side shoulders 22 spaced from each other by a measure L slightly greater than the minimum distance needed to accommodate anchoring rods T thereinbetween, arranged at an inter-axis from each other measuring I, so as to allow adjustments of the horizontal position of the thermo-sanitary appliance AT within predetermined margins and without falling hazards; an excessive side displacement of the thermo-sanitary appliance AT, in fact, is prevented by the interference of one of the two side shoulders 22 with the respective anchoring rod T. To this end, as shown in fig. 1, distance L between the two side shoulders 22 is equal to I + 2 δ + Φ, where Φ is the measure of the diameter of anchoring rods T, I the inter-axis thereof and δ the clearance between each anchoring rod T and the relative shoulder 22 when the support bracket 2 is perfectly centred on anchoring rods T.

The fixing method of the thermo-sanitary appliance AT, which is a very heavy object and the falling whereof would therefore be hazardous, provides for the support bracket 2 to be tightened to said anchoring rods T, through nuts, while it is held into position.

In many European Countries it is common (but sometimes required by specific regulations and directives) to install such thermo-sanitary appliances AT in small places having dimensions equivalent to or a little larger than them, such as closets or "*placards*" (see fig. 8). In such circumstances, the fixing of the thermo-sanitary appliances AT onto said anchoring rods T may be very complicated. In fact, the overall dimensions of the thermo-sanitary appliance AT and the small size of the *placard* wherein it is installed make it very difficult and uncomfortable to reach said anchoring rods T with the usual assembly tools for the tightening operation of the respective nuts.

Such operation for installing a thermo-sanitary appliance AT on the wall currently requires the use of more people: at least one for supporting appliance AT while the other ones carry out said operation of tightening bracket 2 on the anchoring rods T.

The object of the present invention is to eliminate at least a part of the above problems using a wall fixing unit which is very practical for the steps of aligning the thermo-sanitary appliance to be hung and for the installation, replacement and maintenance operations also in very narrow places and having a volume substantially similar to that of the thermo-sanitary appliance to be hung.

A further object of the present invention is to provide a wall fixing unit for thermo-sanitary appliances which is inexpensive to manufacture, simple to make but with a high mechanical resistance.

These and other objects, which shall appear clearly hereinafter, are achieved with a wall hanging unit 1 according to claim 1.

Other objects can also be obtained through the additional features of the dependent claims.

Further features of the present invention shall be better highlighted by the following description of some preferred embodiments, in accordance with the patent claims and illustrated, by way of a non-limiting example in the enclosed designs, wherein:
- fig. 1 schematically shows bracket 2 and anchoring rods T, provided on the wall, according to the prior art.
- fig. 2 shows multiple axonometric views of the wall fixing device of a thermo-sanitary appliance according to a first variant of the invention;
- figs. 3a, 3b, 3c respectively show plan and multiple section views of the wall fixing device of fig. 2;
- fig. 4 shows multiple axonometric views of the wall fixing device of a thermo-sanitary appliance according to a second variant of the invention;
- figs. 5a, 5b, 5c respectively show plan and multiple section views of the wall fixing device of fig. 4;

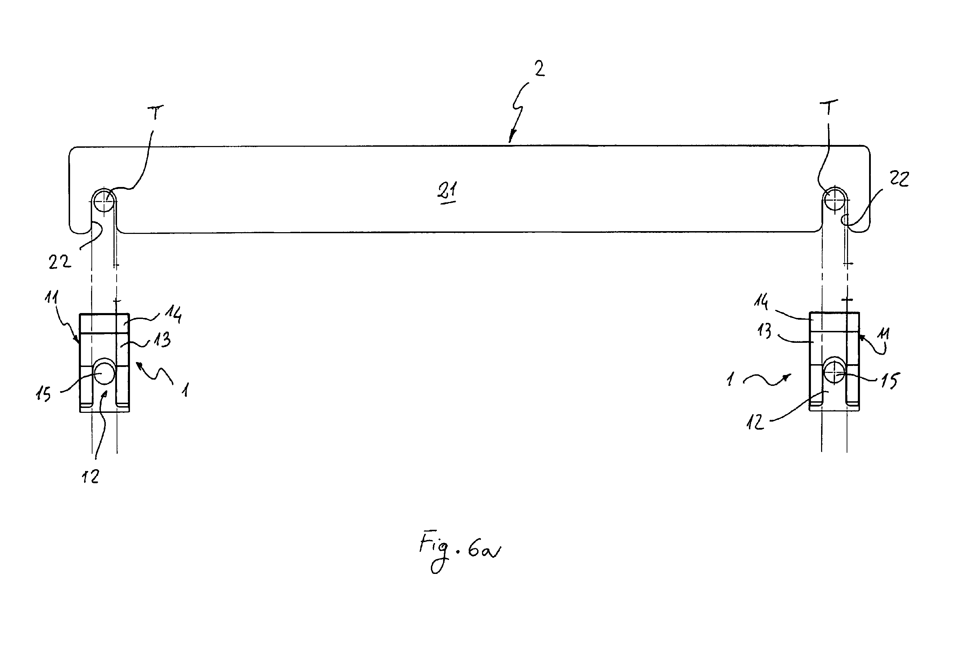

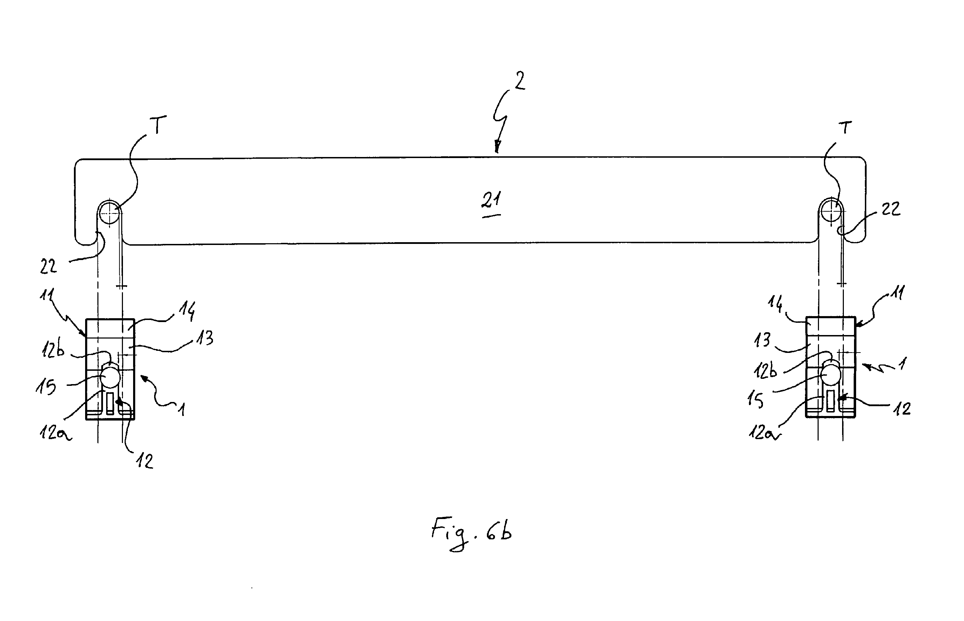

- figs. 6a and 6b respectively show the two variants of the wall fixing device and the bracket element of the thermo-sanitary appliance according to the invention;

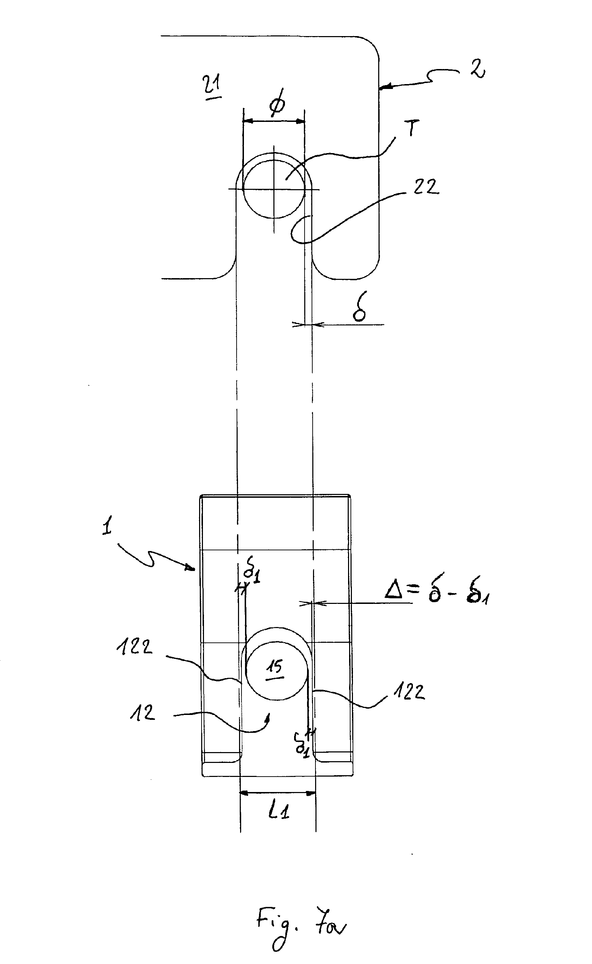

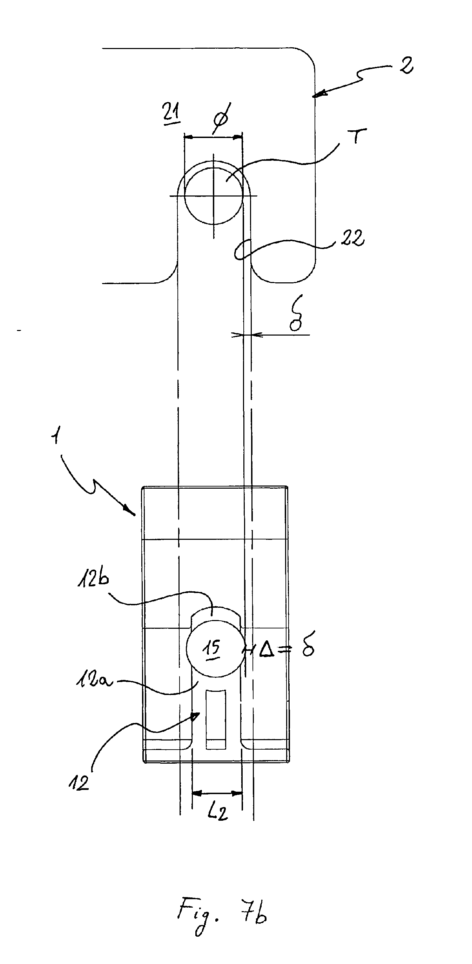

- figs. 7a and 7b respectively show two enlargements of the wall fixing device and of the bracket element of figs. 6a and 6b;
- fig. 8 schematically shows a possible place (closet or "*placard*") for the installation of said thermo-sanitary appliance;
- fig. 9 shows an exploded view of the wall fixing device of a thermo-sanitary appliance;

The features of the invention are now described using the references in the figures. It is noted that the above figures, although schematic, reproduce the components of the device in proportions between their dimensions and spatial orientations which are compatible with a possible embodiment which is among the preferred ones. It is also noted that any dimensional and spatial term (such as "lower", "upper", "inner", "outer", "front", "rear" and the like) refers to the position according to which the fixing unit and the components thereof are viewed when in operational configuration.

Moreover, all the components of the fixing unit 1 of the invention common to those of the prior art shall be denoted with the same reference numeral and shall not be listed anymore except for mentioning those required each time. According to what said in the above discussion about the prior art, reference shall still be made to a thermo-sanitary appliance AT, preferably but not necessarily a water heater AT, provided with at least one support bracket 2 adapted to engage, through opposite side ends thereof onto dedicated anchoring rods T of wall P whereon the installation is desired; therefore, the same definitions of the values involved apply: anchoring rods T are horizontally aligned to each other with an inter-axis measuring I; the distance between the two side shoulders 22 of bracket 2 is L equal to I + 2 δ + Φ, where Φ is the measure of the diameter of anchoring rods T and δ the clearance thereof relative to shoulder 22 of said side ends of bracket 2 (hereinafter referred to as "bracket-anchoring rod clearance").

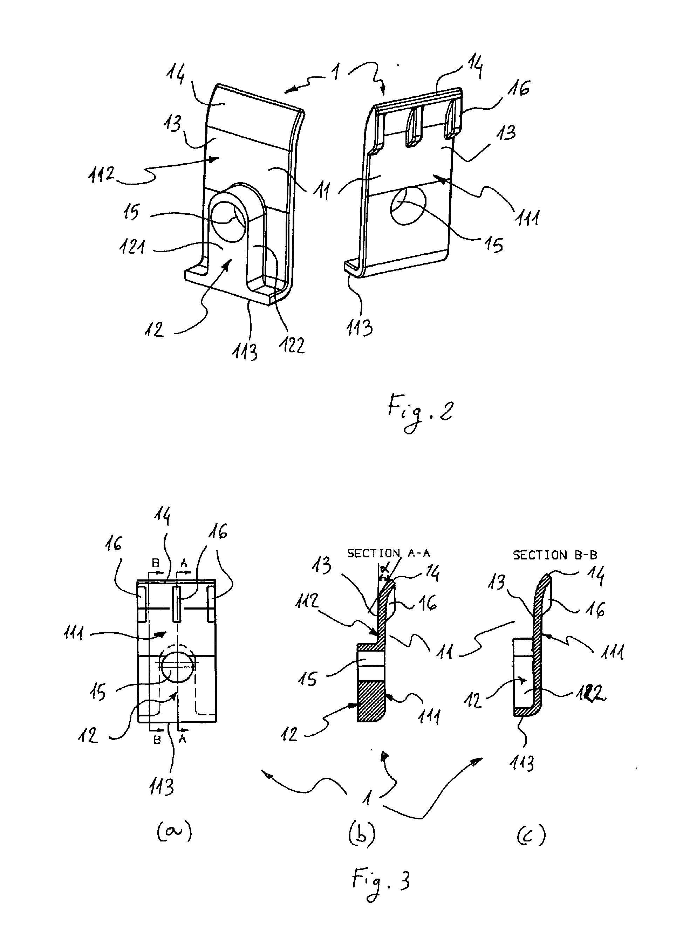

With reference to figs. 2 to 5c, the wall P fixing unit 1 is shown therein according to two variants of the invention.

The at least one support bracket 2 (hereinafter "bracket 2") of said thermo-sanitary appliance AT engages on at least two fixing units 1 mounted on as many anchoring rods T horizontally aligned on wall P allowing the firm and safe wall installation of the same thermo-sanitary appliance AT.

Said fixing unit 1 comprises at least:
- a flat wall fixing plate 11 lying substantially vertical,
- a spacer 12 consisting of one or more parts having thickness S at least equal to that of bracket 2 and adapted to "create", in use configuration (i.e. when the abutment surface 121 thereof is moved and locked, as shall be seen, in close contact with wall P), an inter-space IS between the inner face 112 of plate 11 and the installation wall P for accommodating at least the side end of said bracket 2,
- coupling means 15 with said anchoring rods T, said means consisting of a hole 15, having a horizontal axis, formed through in correspondence with said spacer 12 or defined between the component parts 12a, 12b thereof,
- a guide 13 for the correct and safe insertion of the side ends of bracket 2 within the generated inter-space IS.

A guiding slot 14 may optionally be provided in the summit part of said guide 13, substantially lying on a plane inclined by an angle α relative to the vertical and projected forward relative to the outer face 111 of plate 11, adapted to increase the inlet section for the side ends of bracket 2 within inter-space IS, facilitating the insertion thereof.

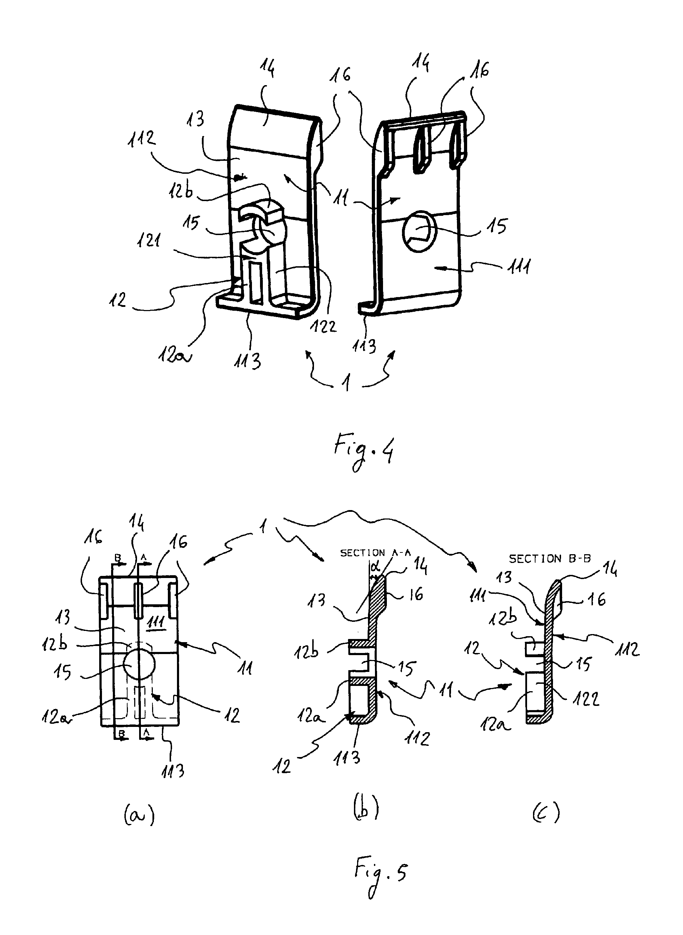

Reference numeral 16, moreover, denotes stiffening ribs between said guiding slot 14 and said guide 13, adapted to increase the mechanical resistance and stiffness of plate 11 stressed by the weight of the thermo-sanitary appliance AT. The firm and safe wall fixing of plate 11 on the corresponding anchoring rod T is ensured by the tightening of a nut 3 and of an optional washer 4 on the outer face 111 thereof, the relative spacer 12 defining said inter-space IS with wall P. According to the invention, the side ends of bracket 2 may be shaped so that they engage on said spacer 12 through shape coupling and/or interference and the like. Moreover, it should be noted that for the purposes of the invention, spacer 12 may indifferently be a known individual element that can be arranged between the inner face 112 of plate 11 and the installation wall P of the thermo-sanitary appliance AT or integral with the same plate 11 and projecting from the inner face 112 thereof, as expressly shown in the annexed figs. 2 and 4.

Fig. 2 therefore shows a spacer 12 consisting of a single element developing starting from base 113 of plate 11 up to substantially the medial zone thereof and comprising, in the summit part thereof, hole 15 for coupling plate 11 with one of anchoring rods T.

On the other hand, spacer 12 of fig. 4 consists of a first lower part 12a extending between base 113 of plate 11 and the lower section of hole 15 and a second upper part 12b substantially obtained around the upper semi-circumference of the same hole 15.

With both such solutions, a clearance Δ (hereinafter referred to as "bracket-spacer clearance") is always ensured between the side faces 122 of spacer 12 and shoulder 22 of the side ends of bracket 2 wherewith it is intended to engage and thus the possibility, upon the wall P installation, of making adjustments to the horizontal position of the thermo-sanitary appliance AT.

In fact, in the case of the fixing device 1 of fig. 4, the two parts 12a, 12b of spacer 12, diametrically opposite hole 15, have a width L2 < of the diameter Φ of anchoring rod T, thus ensuring a bracket-spacer clearance Δ equal to that δ normally provided between the same anchoring rod T and said shoulders 22, referred to as "bracket-anchoring rod clearance δ".

In order to ensure a bracket-spacer clearance Δ to the variant of fig. 1 too, spacer 12 whereof has a width L1 equal to Φ + 2δ₁, where Φ, as seen, is the measure of the diameter of anchoring rod T and δ₁ the measure of the minimum thickness to be provided, for structural and construction reasons, between the inner face of hole 15 and the vertical outer faces 122 of spacer 12, instead it will be sufficient to size δ₁ so as to be ≤ of δ, said bracket-spacer clearance Δ consequently being equal to δ - δ₁.

It is clear that several variants of the invention described above are possible for those skilled in the art, without departing from the novelty scopes of the inventive idea, as well as it is clear that in the practical embodiment of the invention the various components described above may be replaced with technically equivalent ones. For example, said hole 15 may have a "slot" shape with vertical major axis (variant not shown in the annexed figs.) or it may have an increased diameter relative to anchoring rod T wherewith it is intended to couple so as to allow even small adjustments of the vertical position of the thermo-sanitary appliance AT.

In conclusion, it is easy to understand how with the fixing device 1 of the invention, the wall installation of a thermo-sanitary appliance AT is immediate, quick and easy even in small places having a size comparable to that of the same appliance AT. According to the invention, in fact, it will be sufficient to first engage plate 11 with the relative spacer 12 on each of the anchoring rods T, then tighten a nut 3 (and the optional relative washer 4) on the outer face 111 thereof, so as to firmly constrain it to the installation wall P, and then lower the side end of bracket 2 of the thermo-sanitary appliance AT in inter-space IS generated by spacer 12. As already mentioned, said ends may be simply rested onto said spacer and/or optionally coupled therewith by interference and/or by shape coupling without the need for further tightening operations that would be complicated by the overall dimensions of the thermo-sanitary appliance AT to be hung and by the small size of the installation place.

According to the invention, the wall installation of the thermo-sanitary appliance AT may also be carried out by a single operator since, in fact, it may be carried out in two steps (the first one for fixing the fixing devices 1 to the wall, the second one for positioning the thermo-sanitary appliance AT on said devices 1) which are totally independent of each other and temporally consecutive.

## Claims

1. Wall (P) fixing unit (1) for a thermo-sanitary appliance (AT)
capable of:
- being mounted on anchoring rods (T) walled up onto said wall (P) and horizontally aligned one to the other with an inter-axis measuring I,
- and coupling with said thermo-sanitary appliance (AT) through one or more brackets (2) of said appliance (AT), said one or more brackets (2) having a distance L between the shoulders (22) of the side ends thereof and being able to engage onto said anchoring rods (T) horizontally aligned one to the other with the inter-axis I,
**characterised in that** it comprises at least:
- a flat fixing plate (11) lying substantially vertical
- a spacer (12, 12a, 12b), consisting of one (12) or more parts (12a, 12b) and comprised between the inner face (112) of said plate (11) and the installation wall (P), said spacer (12; 12a, 12b) defining an inter-space (IS) between said inner face (112) of said plate (11) and said installation wall (P) suitable for receiving at least the side end of said bracket (2)
- coupling means (15) with said anchoring rods (T), said means consisting of a hole (15), having a horizontal axis, formed in correspondence with said spacer (12; 12a, 12b) or defined between said parts (12a, 12b) of said spacer (12; 12a, 12b)
- a guide (13) for the correct and safe insertion of said side end
of the bracket (2) within said inter-space (IS) said fixing assembly (1) being capable to be tightly secured to the wall (P) by means of the tightening onto said anchoring rods (T) of at least one nut (3) and of the optional relevant washer (4).

2. Fixing unit (1) according to claim 1
**characterised in that**
said spacer (12; 12a, 12b) is integral with said plate (11) and projecting from the inner face thereof (112).

3. Fixing unit (1) according to the previous claim
**characterised in that**
said spacer (12; 12a, 12b) consists of a single element developing starting from the base (113) of said plate (11) up to substantially the medial zone thereof and comprising in the summit part thereof said hole (15) capable to couple with one of said anchoring rods (T).

4. Fixing unit (1) according to the previous claim
**characterised in that**
said spacer (12; 12a, 12b) has a length L1 equal to Φ + 2δ1, where Φ is the measure of the diameter of said anchoring rods (T) and δ1 is the measure of the minimum thickness provided between the inner surface of said hole (15) and the vertical outer faces (122) of said spacer (12; 12a, 12b), said spacer (12; 12a, 12b) guaranteeing a "bracket-spacer clearance" Δ between said outer faces (122) and said shoulders (22) of said bracket (2) at least equal to δ - δ1 with δ1 ≤ δ, where δ is the "bracket-anchoring rod clearance" normally provided between said anchoring rods (T) and said shoulders (22), said bracket-spacer play guaranteeing adjustments of the horizontal position of said thermo-sanitary appliance (AT).

5. Fixing unit (1) according to claim 2
**characterised in that**
said spacer (12; 12a, 12b) is composed of several parts (12a, 12b), said spacer (12; 12a, 12b) providing:
- a first lower part (12a) extending between the base (113) of said plate (11) and the lower section of said hole (15)
- a second upper part (12b) substantially developing around the
upper semi-circumference of said hole (15),
said first (12a) and second (12b) part being diametrically opposed to said hole (15).

6. Fixing unit (1) according to the previous claim
**characterised in that**
said spacer (12; 12a, 12b) has a width L2 < Φ, where Φ is the measure of the diameter of said anchoring rods (T), said spacer (12; 12a, 12b) guaranteeing a "bracket-spacer clearance" Δ between said outer faces thereof (122) and said shoulders (22) of said bracket (2) equal to δ, where δ is the "bracket-anchoring rod clearance" normally provided between said anchoring rods (T) and said shoulders (22) of said bracket (2), said "bracket-spacer clearance" guaranteeing adjustments of the horizontal position of said thermo-sanitary appliance (AT).

7. Fixing unit (1) according to claim 1
**characterised in that**
said spacer (12; 12a, 12b) is a separate element interposable between said inner face (112) of said fixing plate (11) and said installation wall (P) for said thermo-sanitary appliance (AT).

8. Fixing unit (1) according to any previous claim
**characterised in that**
said spacer (12; 12a, 12b) has a thickness (S) substantially equal to the thickness of the side ends of said bracket (2).

9. Fixing unity (1) according to any previous claim
**characterised in that**
said spacer (12; 12a, 12b) and said side ends of said bracket (2) are shaped so to achieve a shape and/or interference coupling therebetween.

10. Fixing unit (1) according to any previous claim
**characterised in that**
said guide (13) comprises in the summit part thereof a guiding slot (14) said guiding slot (14) lying on a plane inclined by an angle (α) respect to the vertical and being projected forward respect to the outer face thereof (111) so as to increase the inlet section for said side ends of said bracket (2) within said inter-space (IS).

11. Fixing unit (1) according to the previous claim
**characterised in that** it further comprises stiffening ribs (16) extending between said guiding slot (14) and said guide (13), suitable to increase the mechanical and deformation resistance of said plate (11) subject to the weight of said thermo-sanitary appliance (AT).

12. Fixing unit (1) according to any previous claim
**characterised in that**
said hole (15) has an increased diameter respect to said anchoring rods (T) wherewith is intended to couple or is shaped as a "slot" having a vertical major axis by a sufficient extent to allow adjustments of the vertical position of said thermo-sanitary appliance (AT).

13. Fixing unit (1) according to any previous claim
**characterised in that**
said thermo-sanitary appliance (AT) is a storage water heater (AT).
